# EUROPEAN PATENT SPECIFICATION

(11) **EP 3 851 868 B1**
(45) Date of publication and mention of the grant of the patent: **07.10.2026**
(21) Application number: 19859556.3
(22) Date of filing: 27.08.2019
(51) Int. Cl.: G01S 7/40, G01S 7/497, G01S 13/931, G01S 17/931

(54) **DEVICE FOR DETECTING AXIAL DEVIATION OF RADAR, VEHICLE-MOUNTED SYSTEM COMPRISING SAME, AND METHOD FOR DETECTING AXIAL DEVIATION OF RADAR**
VORRICHTUNG ZUR ERFASSUNG DER AXIALEN ABWEICHUNG EINES RADARS, FAHRZEUGMONTIERTES SYSTEM MIT DIESER VORRICHTUNG UND VERFAHREN ZUR ERFASSUNG DER ACHSABWEICHUNG EINES RADARS
DISPOSITIF DE DÉTECTION D'UNE DÉVIATION AXIALE DE RADAR, SYSTÈME EMBARQUÉ DANS UN VÉHICULE LE COMPRENANT, ET PROCÉDÉ DE DÉTECTION D'UNE DÉVIATION AXIALE DE RADAR

(30) Priority: 10.09.2018 JP 2018168865
(43) Date of publication of application: 21.07.2021
(73) Proprietor: Astemo, Ltd., Tokyo 100-0004 (JP)
(72) Inventor: ENOMOTO, Yoshiaki, Hitachinaka-shi, Ibaraki 312-8503 (JP); KUDO, Makoto, Hitachinaka-shi, Ibaraki 312-8503 (JP)
(74) Representative: MERH-IP Matias Erny Reichl Hoffmann Patentanwälte PartG mbB
(86) International application number: PCT/JP2019/033415
(87) International publication number: WO 2020/054392

(56) References cited:
- DE-A1- 102017 210 112
- JP-A- 2010 127 743
- JP-A- 2010 127 743
- JP-A- 2011 002 346
- JP-A- 2011 002 346
- JP-A- 2017 068 440
- JP-A- 2019 002 929
- US-A1- 2014 333 473
- US-A1- 2018 113 195

## Description

### Technical Field

The present invention relates to a device for detecting axial deviation of a radar, a vehicle-mounted system comprising the same, and a method for detecting axial deviation of the radar.

### Background Art

In recent years, vehicle-mounted systems for performing driving support or autonomous driving of a vehicle have been developed. The vehicle-mounted system includes, for example, a radar that detects a surrounding object (specifically, other vehicles, people, roadside structures, and the like) around the vehicle, and an electronic control unit that controls driving support or autonomous driving of the vehicle based on surrounding object data acquired by the radar.

The radar is attached to the vehicle so that a reference axis (in other words, central axis of a detection region) is in a predetermined direction. The radar transmits electromagnetic waves (specifically, radio waves or light) to the surrounding of the vehicle and receives reflected waves from the surrounding object to acquire surrounding object data (specifically, relative position, and the like). If axial deviation occurs in the radar for some reasons, an error occurs in surrounding object data acquired by the radar, and the error influences control of driving support or autonomous driving of the vehicle.

PTL 1 discloses a method for correcting a reference axis of a radar mounted on a vehicle. In this method, a corner reflector is installed in advance at a predetermined relative position on the assumption that the vehicle stops at a predetermined position. The radar receives reflected waves from the corner reflector, and thereby the radar acquires the direction of the corner reflector, and the reference axis is corrected based on the acquired direction. Furthermore, PTL 2 discloses a radar system adapted to detect an axial deviation of a radar apparatus without providing a means for detecting the inclination of a vehicle body. PTL 3 discloses a signal processing apparatus of a radar transceiver that is mounted on a vehicle, wherein an axis deviation detecting means is provided to detect whether or not a difference between a distribution direction and a reference direction is equal to or greater than a reference value. Eventually, PTL 4 discloses a method of performing calibration of a radar system on a mobile platform.

### Citation List

### Patent Literature

PTL 1: JP 2003-270327 A
PTL 2: JP 2010-127743 A
PTL 3: JP 2011-002346 A
PTL 4: US 2018/113195 A1

### Summary of Invention

### Technical Problem

Meanwhile, for example, when a vehicle is parked in a public parking area, the vehicle may receive an object collision to deform, and thus the axial deviation may occur in the radar, during a period from when a driver has exited the vehicle until the driver enters the vehicle again. Then, even though the axial deviation occurs in the radar, the driver may not notice the axial deviation. In the method disclosed in PTL 1, the axial deviation of the radar can be detected and corrected only after the vehicle travels to a specific place where the corner reflector is installed in advance.

The present invention has been made in view of the above circumstances, and an object of the present invention is to provide a device for detecting axial deviation of a radar, a vehicle-mounted system comprising the same, and a method for detecting axial deviation of the radar, in which it is possible to detect axial deviation of a radar, which occurs while a vehicle is parked, before the vehicle travels.

### Solution to Problem

In order to achieve the above object, the present invention provides a device for detecting axial deviation of a radar mounted on a vehicle according to claim 1 as well as a method for detecting axial deviation of a radar mounted on a vehicle according to claim 5. Preferable embodiments are claimed by the dependent claims. Advantageous Effects of Invention

According to the present invention, it is possible to detect axial deviation of a radar, which occurs while a vehicle is parked, before the vehicle travels.

### Brief Description of Drawings

[FIG. 1] FIG. 1 is a block diagram illustrating a configuration of a vehicle-mounted system according to an embodiment of the present invention.
[FIG. 2] FIG. 2 is a block diagram illustrating a configuration of a radar unit in the embodiment of the present invention.
[FIG. 3] FIG. 3 is a top view of a vehicle illustrating a radar detection region along with a radar arrangement in the embodiment of the present invention.
[FIG. 4] FIG. 4 is a flowchart illustrating a pre-process performed when a driver has exited the vehicle among processes of an axial deviation detection device in the embodiment of the present invention.
[FIG. 5] FIG. 5 is a top view of a vehicle illustrating a specific example of a surrounding object detected by a radar in the embodiment of the present invention.
[FIG. 6] FIG. 6 is a flowchart illustrating a post-process performed when the driver has entered the vehicle among processes of the axial deviation detection device in the embodiment of the present invention.
[FIG. 7] FIG. 7 is a top view of a vehicle illustrating a specific example of the axial deviation of the radar in the embodiment of the present invention.
[FIG. 8] FIG. 8 is a block diagram illustrating a configuration of a vehicle-mounted system according to a modification example of the present invention.
[FIG. 9] FIG. 9 is a flowchart illustrating processing of an electronic control unit according to another modification example of the present invention.
[FIG. 10] FIG. 10 is a top view of a vehicle illustrating a specific example of a non-detection region caused by the axial deviation of the radar in another modification example of the present invention.

### Description of Embodiments

An embodiment of the present invention will be described with reference to the drawings.

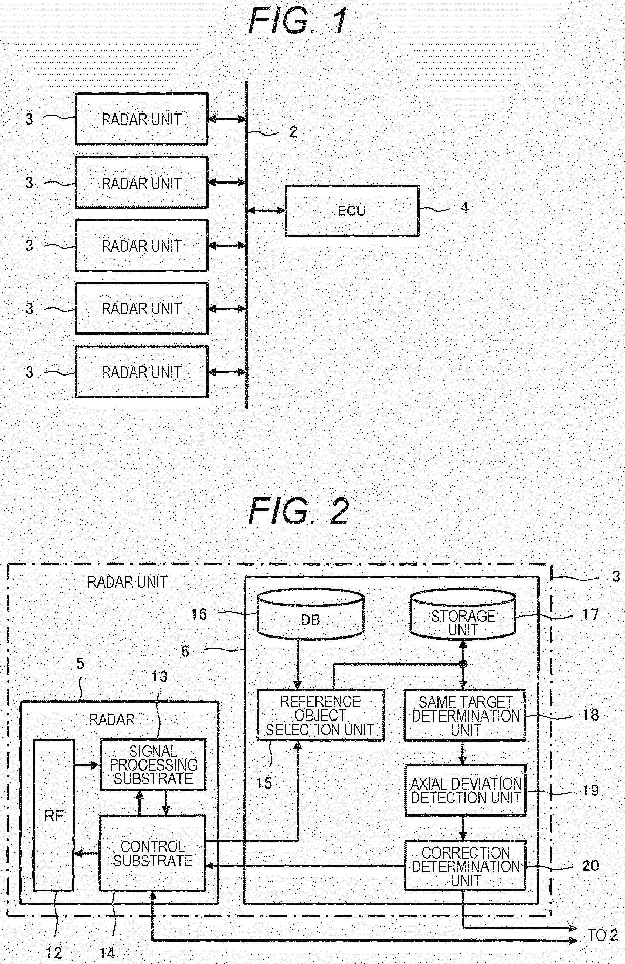

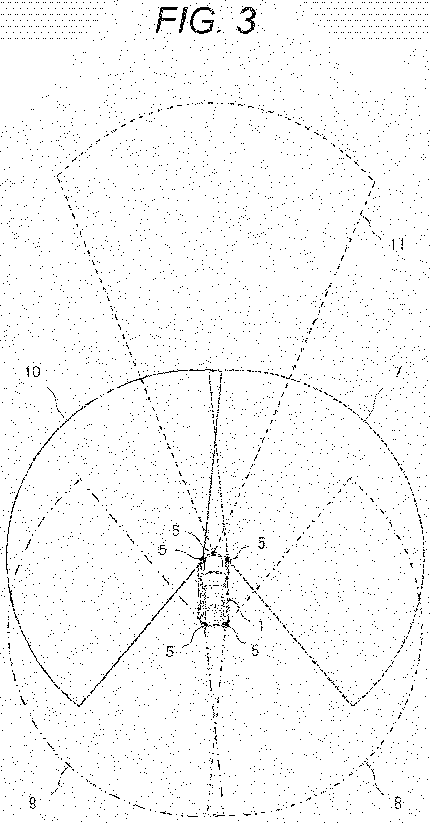

FIG. 1 is a block diagram illustrating a configuration of a vehicle-mounted system according to an embodiment of the present invention. FIG. 2 is a block diagram illustrating a configuration of a radar unit in the embodiment of the present invention. FIG. 3 is a top view of a vehicle illustrating a radar detection region along with a radar arrangement in the embodiment of the present invention.

In the embodiment, a vehicle-mounted system is mounted on a vehicle 1 (see FIG. 3), and includes a plurality of radar units 3 and an electronic control unit (ECU) 4, which are communicably connected to each other via a network 2. Each of the radar units 3 includes a radar 5 and an axial deviation detection device 6. The electronic control unit 4 and the axial deviation detection device 6 are configured by a computer or the like.

As illustrated in FIG. 3, for example, the plurality of radars 5 are housed in the bumper of the vehicle 1 and arranged on the front right side, the rear right side, the rear left side, the front left side, and the front center of the vehicle 1, respectively. The plurality of radars detect surrounding objects (specifically, other vehicles, people, roadside structures, and the like) in a detection region 7 on the front right side of the vehicle 1, a detection region 8 on the rear right side, a detection region 9 on the rear left side, a detection region 10 on the front left side, and a detection region 11 in the front center, respectively. The radar 5 is, for example, a millimeter-wave radar that uses millimeter waves (in other words, high-frequency radio waves). The radar transmits radio waves to the surrounding of vehicle 1 and receives reflected waves from surrounding objects, so as to acquire surrounding object data.

The radar 5 is configured by a radio frequency module (RF) 12, a signal processing board 13, a control board 14, and the like. The control board 14 is connected to the network 2 and controls the radio frequency module 12 and the signal processing board 13. The radio frequency module 12 includes an antenna for transmitting and receiving radio waves, and a monolithic microwave integrated circuit (MMIC) that converts the radio waves (in other words, reflected waves from the surrounding objects) received by the antenna into electrical signals. The signal processing board 13 performs a process such as fast Fourier transform (FFT) on the electric signal from the radio frequency module 12. Thus, the surrounding object data (specifically, relative position, relative velocity, radar cross section, and the like) is acquired.

The electronic control unit 4 receives an input of the surrounding object data from the radar 5 via the network 2, and controls driving support or autonomous driving of the vehicle 1 based on the input data. Because the control related to the driving support or autonomous driving of the vehicle 1 is known, the description thereof will be omitted.

The plurality of axial deviation detection devices 6, which are the main components of the present embodiment, receive an input of the surrounding object data from the plurality of radars 5, and detect the axial deviations of the plurality of radars 5 based on the data. The axial deviation detection device 6 includes a reference object selection unit 15, a database (DB) 16, a storage unit 17, a same target determination unit 18, an axial deviation detection unit 19, and a correction determination unit 20, as functional components. The database 16 and the storage unit 17 are configured by a flash memory and the like.

The database 16 stores, in advance, reference information for determining whether or not the surrounding object is a movement target. Specifically, for example, the database stores, in advance, the radar cross section (RCS) of a movement target (specifically, another vehicle, a person, and the like) corresponding to the frequency of the radio wave used in the radar 5. For example, if the frequency of the radio wave used in the radar 5 is 76 GHz, the radar cross section of another vehicle is 5 to 15 dBsm, and the radar cross section of a person is -10 to 0 dBsm.

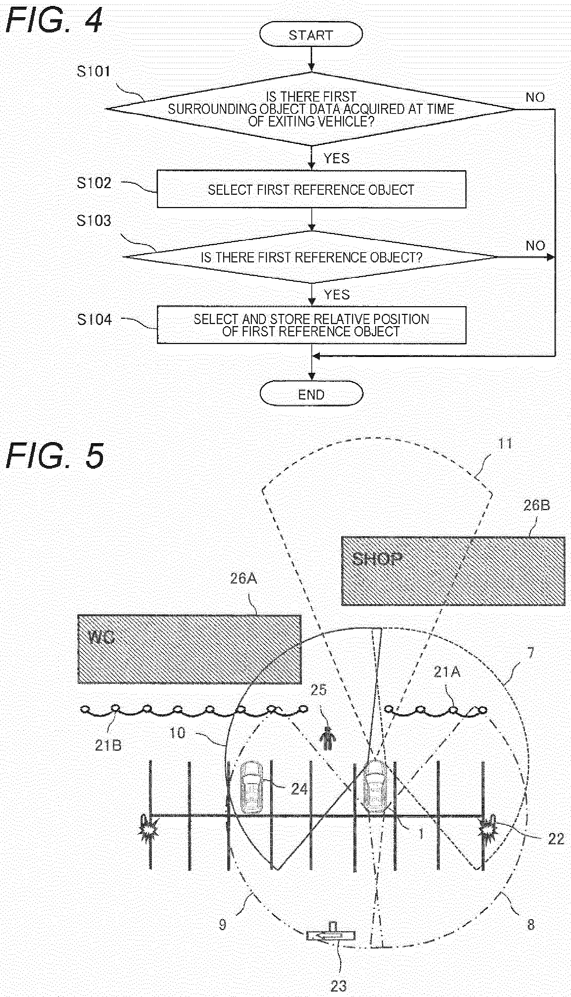

The processing of the axial deviation detection device 6 is roughly divided into a pre-process performed when a driver has exited the vehicle 1 and a post-process performed when the driver has entered the vehicle 1 after the exit. Firstly, the pre-process performed when the driver has exited the vehicle 1 will be described. FIG. 4 is a flowchart illustrating the pre-process when the driver has exited the vehicle among processes of the axial deviation detection device in the embodiment of the present invention.

For example, when the axial deviation detection device 6 receives an input of information indicating an ignition OFF (engine stop) and information of a door opening operation, the subsequent door closing operation, and the subsequent door locking operation via the network 2, the axial deviation detection device determines that the driver has exited the vehicle 1. Thus, the pre-process illustrated in FIG. 4 is started.

Firstly, in Step S101, the reference object selection unit 15 of the axial deviation detection device 6 determines whether or not surrounding object data has been input from the radar 5 when the driver has exited the vehicle 1.

For example, when vehicle 1 is parked in a vacant lot, there are no surrounding object in the detection region of the radar 5. In this case, the surrounding object data is not input, and thus the determination in Step S101 becomes NO, and the pre-process ends.

For example, as illustrated in FIG. 5, when the vehicle 1 is parked in a public parking area, a metal fence 21A and a streetlight pole 22 exist in the detection region 7 on the front right side, the metal fence 21A and the streetlight pole 22 exist in the detection region 8 on the rear right side, a sign 23, another vehicle 24, and a metal fence 21B exist in the detection region 9 on the rear left side, another vehicle 24, the metal fence 21B, a person 25, and a vertical shop 26A exist in the detection region 10 on the front left side, a vertical shop 26B and the metal fence 21A exist in the detection region 11 in the front center. In this case, the surrounding object data is input, and thus the determination in Step S101 becomes YES, and the process proceeds to Step S102. Note that, the surrounding object detected by the radar 5 when the driver has exited the vehicle 1 is referred to as a first surrounding object.

In Step S102, the reference object selection unit 15 of the axial deviation detection device 6 determines whether or not the first surrounding object is stationary based on the relative velocity of the first surrounding object acquired by the radar 5.

In addition, the reference object selection unit 15 determines whether or not the radar cross section of the first surrounding object acquired by the radar 5 is equal to the radar cross section of the movement target stored in advance in the database 16, so as to determine whether or not the first surrounding object is the movement target. Then, the reference object selection unit 15 selects a first reference object that satisfies the condition of being stationary and not being the movement target among the first surrounding objects.

Describing with a specific example of the surrounding object illustrated in FIG. 5, the metal fence 21A and the streetlight pole 22 are selected as the first reference objects among the metal fences 21A and the streetlight poles 22 existing in the detection region 7 on the front right side. The metal fence 21A and the streetlight pole 22 are selected as the first reference objects among the metal fences 21A and the streetlight poles 22 existing in the detection region 8 on the rear right side. The sign 23 and the metal fence 21B are selected as the first reference objects among the signs 23, other vehicles 24, and the metal fence 21B existing in the detection region 9 on the rear left side. The metal fence 21B and the vertical shop 26A are selected as the first reference objects among the other vehicles 24, the metal fence 21B, the person 25, and the vertical shop 26A existing in the detection region 10 on the front left side. The vertical shop 26B and the metal fence 21A are selected as the first reference object among the vertical shop 26B and the metal fence 21A existing in the detection region 11 in the front center.

Proceeding to Step S103, the reference object selection unit 15 of the axial deviation detection device 6 determines whether or not there is the first reference object. When there is no first reference object, the determination in Step S103 becomes NO, and the pre-process ends. On the other hand, when there is the first reference object, the determination in Step S103 becomes YES, and the process proceeds to Step S104.

In Step S104, the reference object selection unit 15 of the axial deviation detection device 6 selects the relative position of the first reference object among the relative positions of the first surrounding objects, which are acquired by the radar 5, and the reference object selection unit stores the selected relative position in the storage unit 17. The reference object selection unit 15 of the axial deviation detection device 6 may select not only the relative position of the first reference object but also the shape and size (or radar cross section) of the first reference object. The reference object selection unit may store the selected relative position, shape, and size in the storage unit 17.

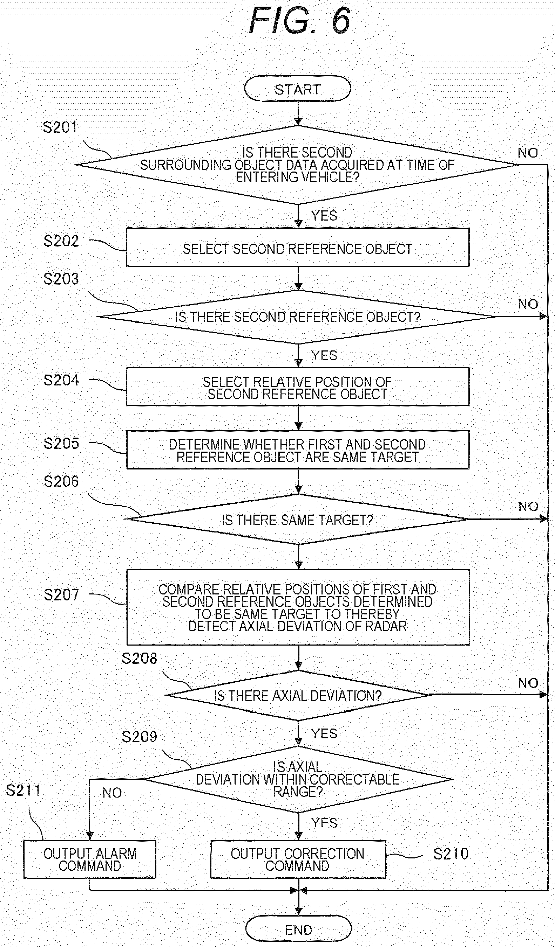

Next, the post-process performed when the driver has entered the vehicle 1 will be described. FIG. 6 is a flowchart illustrating the post-process performed when the driver has entered the vehicle among processes of the axial deviation detection device in the embodiment of the present invention.

For example, when the axial deviation detection device 6 receives an input of information of a door unlocking operation via the network 2, the axial deviation detection device determines that the driver has entered the vehicle 1. Thus, the post-process illustrated in FIG. 6 is started.

Firstly, in Step S201, the reference object selection unit 15 of the axial deviation detection device 6 determines whether or not surrounding object data has been input from the radar 5 when the driver has entered the vehicle **1.** When the surrounding object data is not input from the radar 5, and thus the determination in Step S201 becomes NO, and the post-process ends. On the other hand, when the surrounding object data is input from the radar 5, the determination in Step S201 becomes YES, and the process proceeds to Step S202. Note that, the surrounding object detected by the radar 5 when the driver has entered the vehicle 1 is referred to as a second surrounding object.

In Step S202, the reference object selection unit 15 of the axial deviation detection device 6 determines whether or not the second surrounding object is stationary based on the relative velocity of the second surrounding object acquired by the radar 5.

In addition, the reference object selection unit 15 determines whether or not the radar cross section of the second surrounding object acquired by the radar 5 is equal to the radar cross section of the movement target stored in advance in the database 16, so as to determine whether or not the second surrounding object is the movement target. Then, the reference object selection unit 15 selects a second reference object that satisfies the condition of being stationary and not being the movement target among the second surrounding objects.

Then, the process proceeds to Step S203, and the reference object selection unit 15 of the axial deviation detection device 6 determines whether or not there is a second reference object. When there is no second reference object, the determination in Step S203 becomes NO, and the post-process ends. On the other hand, when there is the second reference object, the determination in Step S203 becomes YES, and the process proceeds to Step S204. In Step S204, the reference object selection unit 15 of the axial deviation detection device 6 selects the relative position of the second reference object among pieces of second surrounding object data acquired by the radar 5. The reference object selection unit 15 of the axial deviation detection device 6 may select not only the relative position of the second reference object but also the shape and size (or radar cross section) of the second reference object.

Then, the process proceeds to Step S205. The same target determination unit 18 of the axial deviation detection device 6 determines, for example, whether or not a difference between the relative position of the first reference object (stored in the storage unit 17 in Step S104 described above) and the relative position of the second reference object (selected in Step S204 described above) is within a predetermined range set in advance, and thereby determines whether or not the first reference object and the second reference object are the same target. Note that, the same target determination unit 18 of the axial deviation detection device 6 may determine whether or not the shape or size (or radar cross section) of the first reference object stored in the storage unit 17 in Step S104 described above is similar to the shape or size (or radar cross section) of the second reference object selected in Step S204 described above, and thereby determine whether or not the first reference object and the second reference object are the same target.

Then, the process proceeds to Step S206, and the same target determination unit 18 of the axial deviation detection device 6 determines whether or not there is the same target. When there is no same target, the determination in Step S206 becomes NO, and the post-process ends. On the other hand, when there is the same target, the determination in Step S206 becomes YES, and the process proceeds to Step S207.

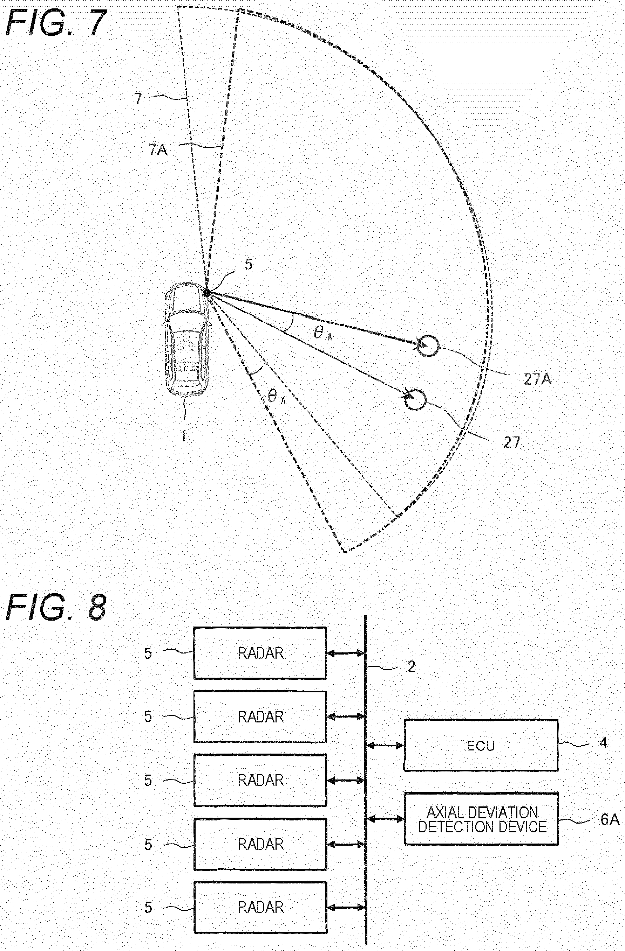

In Step S207, the axial deviation detection unit 19 of the axial deviation detection device 6 compares the relative positions (in particular, relative directions) of the first reference object and the second reference object determined to be the same target to each other, and thereby detects the axial deviation (specifically, deviation angle of the reference axis in at least one of a horizontal direction and a vertical direction) of the radar 5. Then, the process proceeds to Step S208. The axial deviation detection unit 19 of the axial deviation detection device 6 determines whether or not the deviation angle of the reference axis of the radar 5 is equal to or larger than a threshold value set in advance, and thereby determines whether or not the axial deviation of the radar 5 occurs. When there is no axial deviation of the radar 5 (in other words, when the deviation angle of the reference axis is smaller than the threshold value), the determination in Step S208 becomes NO, and the post-process ends. On the other hand, for example, as illustrated in FIG. 7, the axial deviation (specifically, deviation angle θ_{A} of the reference axis in the horizontal direction) of the radar 5 mounted on the front right side of the vehicle 1 occurs. Thus, when the detection region 7 for the axial deviation is deviated to a detection region 7A, the relative position 27 of the streetlight pole 22 is shifted to a relative position 27A. Then, when there is the axial deviation of the radar 5 (in other words, when the deviation angle of the reference axis is equal to or larger than the threshold value), the determination in Step S208 becomes YES, and the process proceeds to Step S209.

In Step S209, the correction determination unit 20 of the axial deviation detection device 6 determines whether or not the axial deviation of the radar 5 is within a range in which the axial deviation of the radar 5 can be corrected by software. When the axial deviation of the radar 5 is within the correctable range, the determination in Step S209 becomes YES, and the process proceeds to Step S210.

In Step S210, the correction determination unit 20 of the axial deviation detection device 6 outputs a correction command for the reference axis to the radar 5. The control board 14 of the radar 5 corrects the reference axis (in other words, the central axis of the detection region) in response to this correction command.

On the other hand, when the axial deviation of the radar 5 is not within the correctable range, the determination in Step S209 becomes NO, and the process proceeds to Step S211. In Step S211 the correction determination unit 20 of the axial deviation detection device 6 outputs an alarm command to an alarm (specifically, for example, display or buzzer) to generate an alarm. In addition, the correction determination unit 20 of the axial deviation detection device 6 outputs a travel restriction command to the electronic control unit 4 via the network 2 to restrict travelling of the vehicle 1.

As described above, in the embodiment, it is possible to detect the axial deviation of the radar 5 that occurs while the vehicle 1 is parked, before the vehicle 1 travels. Then, if the axial deviation of the radar 5 is within the range in which the axial deviation can be corrected by software, the axial deviation of the radar 5 is corrected by software, so that it is possible to prevent an occurrence of the error in the surrounding object data. On the other hand, if the axial deviation of the radar 5 is not within the range in which the axial deviation can be corrected by software, it is possible to notify the driver that the hardware needs to be adjusted, by the alarm.

Note that, in the above embodiment, an example in which the reference object selection unit 15 of the axial deviation detection device 6 determines whether or not the radar cross section of the surrounding object acquired by the radar 5 is equal to the radar cross section of the movement target stored in the database 16 in advance, and thereby determines whether or not the surrounding object is the movement target is described. The present invention is not limited to this example. For example, the reference object selection unit 15 of the axial deviation detection device 6 may determine whether or not the radar cross section of the surrounding object acquired by the radar 5 is equal to or smaller than a predetermined value set in advance, and thereby may determine whether or not the surrounding object is the movement target. Alternatively, the database 16 may store, in advance, the radar cross section of a non-movement target corresponding to the frequency of the radio wave used in the radar 5. Then, the reference object selection unit 15 of the axial deviation detection device 6 may determine whether or not the radar cross section of the surrounding object acquired by the radar 5 is equal to the radar cross section of the non-movement target stored in advance in the database 16, so as to determine whether or not the surrounding object is the movement target.

Alternatively, the database 16 may store the shape and size of the movement target in advance. Then, the reference object selection unit 15 of the axial deviation detection device 6 may determine whether the shape or size of the surrounding object acquired by the radar 5 are similar to the shape or size of the movement target stored in advance in the database 16, and thereby determine whether or not the surrounding object is the movement target. Alternatively, the database 16 may store the shape or size of the non-movement target in advance. Then, the reference object selection unit 15 of the axial deviation detection device 6 may determine whether the shape or size of the surrounding object acquired by the radar 5 are similar to the shape of the non-movement target stored in advance in the database 16, and thereby determine whether or not the surrounding object is the non-movement target.

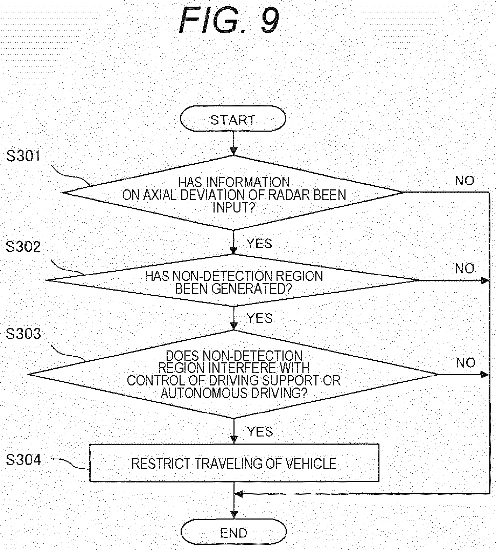

Further, in the embodiment, an example in which the vehicle-mounted system includes the plurality of radar units 3 and the electronic control units 4 that are communicably connected to each other via the network 2 (in other words, when the vehicle-mounted system includes a plurality of axial deviation detection devices 6 that detect the axial deviation of the plurality of radars 5, respectively) is described. The present invention is not limited to this example. For example, as in the modification example illustrated in FIG. 9, the vehicle-mounted system may include a plurality of radars 5, a deviation detection device 6A, and an electronic control unit 4 that are communicably connected to each other via the network 2. In other words, the vehicle-mounted system may include one axial deviation detection device 6A that detects the axial deviation of the plurality of radars 5. Also in this modification example, it is possible to obtain the similar effects to those in the above embodiment.

In an example not according to the invention, the above-described axial deviation detection device 6A may compare the relative positions of the reference object, which are acquired by two radars 5, the reference object existing in the overlapping portion of the detection regions of the two radars 5, and thereby detect the axial deviation of the radar 5.

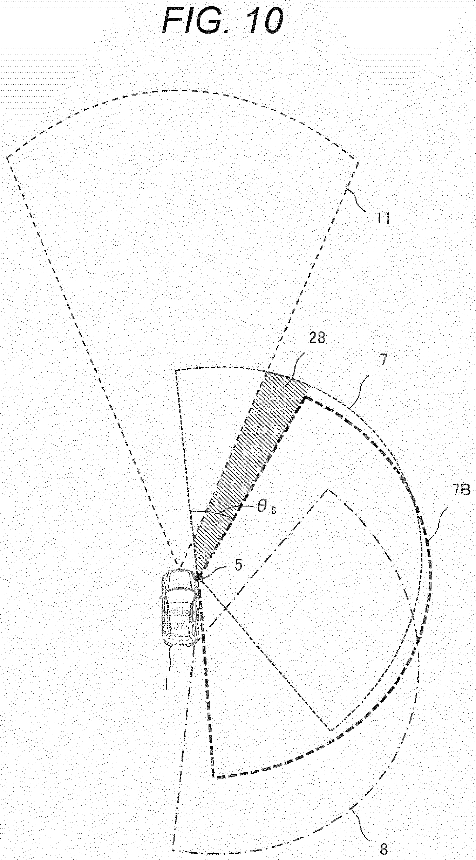

Further, in the above embodiment and the above modification examples, an example in which, when the axial deviation of the radar 5 is not within the correctable range, the correction determination unit 20 of the axial deviation detection device 6 or 6A outputs a traveling restriction command to the electronic control unit 4 via the network 2 to restrict the traveling of the vehicle 1 is described. The present invention is not limited to this example. For example, the correction determination unit 20 of the axial deviation detection device 6 or 6A may output information on the axial deviation of the radar 5 to the electronic control unit 4 via the network 2 when the axial deviation of the radar 5 is not within the correctable range. In such a modification example, the processing of the electronic control unit 4 will be described with reference to FIGS. 9 and 10. FIG. 9 is a flowchart illustrating processing of the electronic control unit in this modification example.

In Step S301, the electronic control unit 4 determines whether or not the information on the axial deviation of the radar 5 has been input. When the information on the axial deviation of the radar 5 is not input, the determination in Step S301 becomes NO, and the process ends. On the other hand, when the information on the axial deviation of the radar 5 is input, the determination in Step S301 becomes YES, and the process proceeds to Step S302.

In Step S302, the electronic control unit 4 determines whether or not there is a non-detection region, based on the information on the axial deviation of the radar 5. When there is no non-detection region, the determination in Step S302 becomes NO, and the process ends.

On the other hand, for example, as illustrated in FIG. 10, when the axial deviation (specifically, deviation angle θ_{B} of the reference axis in the horizontal direction) of the radar 5 mounted on the front right side of the vehicle 1 occurs, and the detection region 7 for the deviation angle is shifted to a detection region 7B, a non-detection region 28 is generated between the detection region 7B and the detection region 11 adjacent to the detection region 7B. When such a non-detection region is generated, the determination in Step S302 becomes YES, and the process proceeds to Step S303.

In Step S303, the electronic control unit 4 determines whether or not the non-detection region interferes with the control of the driving support or the autonomous driving of the vehicle 1. Specifically, the electronic control unit determines whether or not the non-detection region is at a position causing interference with the control of the driving support or the autonomous driving of the vehicle 1, and whether or not the non-detection region has a large size enough to interfere with the control of the driving support or the autonomous driving of the vehicle 1. When the non-detection region does not interfere with the control of the driving support or the autonomous driving of the vehicle 1, the determination in Step S303 becomes NO, and the process ends. On the other hand, when the non-detection region interferes with the control of the driving support or the autonomous driving of the vehicle 1, the determination in Step S303 becomes YES, and the process proceeds to Step S304. In Step S304, the electronic control unit 4 restricts the traveling of the vehicle 1.

In the above embodiment and the above modification examples, an example in which the radar 5 is a millimeter wave radar is described. In examples not according to the invention, the radar 5 may be, for example, a laser radar using a laser (in other words, light).

Further, although not particularly described in the above embodiment and the above modification examples, the vehicle-mounted system may include a camera that captures the surrounding of the vehicle 1 and an image processing device that processes an image of the camera to detect surrounding objects. Then, the electronic control unit 4 may control the driving support or the autonomous driving of the vehicle 1 based on the surrounding object data acquired by the image processing device. Further, the vehicle-mounted system may include an own-vehicle position acquisition device that acquires the position of the vehicle 1 by using a global positioning system (GPS) and a map information storage device that stores map information. Then, the electronic control unit 4 may control the driving support or autonomous driving of the vehicle 1 based on the position of the vehicle 1 and the map information.

### Reference Signs List

- 1: vehicle
- 5: radar
- 6,6A: axial deviation detection device
- 21A,21B: metal fence (surrounding object, reference object)
- 22: streetlight pole (surrounding object, reference object)
- 23: sign (surrounding object, reference object)
- 24: other vehicles (surrounding object)
- 25: person (surrounding object)
- 26A,26B: vertical shop (reference object)

## Claims

1. A device for detecting axial deviation of a radar (5) mounted on a vehicle (1), **characterised in that** the device is configured to perform:
a first process of selecting a first reference object that satisfies a condition of being stationary and not being a movement target from among first surrounding objects, the selection being made based on first surrounding object data acquired by the radar (5) when a driver has exited the vehicle (1), and selecting and storing a relative position of the first reference object among relative positions of the first surrounding objects, that are acquired by the radar (5) when the driver has exited the vehicle (1),
a second process of, then, selecting a second reference object that satisfies a condition of being stationary and not being a movement target from among second surrounding objects, the selection being made based on second surrounding object data acquired by the radar (5) when the driver has entered the vehicle (1), and selecting a relative position of the second reference object among relative positions of the second surrounding objects, that are acquired by the radar (5) when the driver has entered the vehicle (1), and
a third process of determining whether or not the first reference object and the second reference object are the same target, and comparing the relative positions of the first reference object and the second reference object that are determined to be the same target, to thereby detect axial deviation of the radar (5).

2. The device for detecting axial deviation of a radar (5) according to claim 1, wherein the device is configured to perform a fourth process of determining whether or not the axial deviation of the radar (5) is within a correctable range, and a fifth process of outputting a correction command of a reference axis of the radar (5) when the axial deviation of the radar (5) is within the correctable range.

3. The device for detecting axial deviation of a radar (5) according to claim 2, wherein the device is configured to perform a sixth process of outputting an alarm command when the axial deviation of the radar (5) is not within the correctable range.

4. A vehicle-mounted system, comprising:
a radar (5) that detects a surrounding object (21A, 21B, 22, 23, 24, 25) around a vehicle (1),
an electronic control unit (4) that controls driving support or autonomous driving of the vehicle (1) based on surrounding object data acquired by the radar (5); and
a device for detecting axial deviation of the radar (5) according to claim 3,
wherein the sixth process further includes:
outputting information on the axial deviation of the radar (5) to the electronic control unit, when the axial deviation of the radar (5) is not within the correctable range, and wherein
the electronic control unit (4) is configured to perform
a seventh process of determining whether or not a non-detection region is generated, based on the information on the axial deviation of the radar (5),
an eighth process of determining whether or not the non-detection region interferes with control of driving support or autonomous driving of the vehicle (1), when the non-detection region is generated, and
a ninth process of restricting traveling of the vehicle (1) when the non-detection region interferes with the control of the driving support or the autonomous driving of the vehicle (1).

5. A method for detecting axial deviation of a radar (5) mounted on a vehicle (1), **characterised in that** the method comprises:
a first process, performed by a device for detecting axial deviation, of selecting a first reference object that satisfies a condition of being stationary and not being a movement target from among first surrounding objects, the selection being made based on first surrounding object data acquired by the radar (5) when a driver has exited the vehicle (1), and selecting and storing a relative position of the first reference object among relative positions of the first surrounding objects, that are acquired by the radar (5) when the driver has exited the vehicle (1);
a second process, performed by the device for detecting axial deviation, of, then, selecting a second reference object that satisfies a condition of being stationary and not being a movement target from among second surrounding objects, the selection being made based on second surrounding object data acquired by the radar (5) when the driver has entered the vehicle (1), and selecting a relative position of the second reference object among relative positions of the second surrounding objects, that are acquired by the radar (5) when the driver has entered the vehicle (1); and
a third process, performed by the device for detecting axial deviation, of determining whether or not the first reference object and the second reference object are the same target, and comparing the relative positions of the first reference object and the second reference object that are determined to be the same target, to thereby detect axial deviation of the radar (5).

6. The method for detecting axial deviation of a radar (5) according to claim 5, further comprising:
a fourth process, performed by the device for detecting axial deviation, of determining whether or not the axial deviation of the radar (5) is within a correctable range; and
a fifth process, performed by the device for detecting axial deviation, of outputting a correction command of a reference axis of the radar (5) when the axial deviation of the radar (5) is within the correctable range.

7. The method for detecting axial deviation of a radar (5) according to claim 6, further comprising
a sixth process, performed by the device for detecting axial deviation, of outputting an alarm command when the axial deviation of the radar (5) is not within the correctable range.

8. The method for detecting axial deviation of a radar (5) according to claim 7, further comprising:
a seventh process, performed by an electronic control unit, of determining whether or not a non-detection region is generated, based on information on the axial deviation of the radar (5), when the axial deviation of the radar (5) is not within the correctable range;
an eighth process, performed by the electronic control unit, of determining whether or not the non-detection region interferes with control of driving support or autonomous driving of the vehicle (1), when the non-detection region is generated; and
a ninth process, performed by the electronic control unit, of restricting traveling of the vehicle (1) when the non-detection region interferes with the control of the driving support or the autonomous driving of the vehicle (1).

## Patentansprüche

1. Vorrichtung zum Detektieren einer axialen Abweichung eines Radars (5), das an einem Fahrzeug (1) angebracht ist,
**dadurch gekennzeichnet, dass** die Vorrichtung konfiguriert ist, Folgendes auszuführen:
einen ersten Prozess des Auswählens eines ersten Bezugsobjekts, das unter ersten umgebenden Objekten der Bedingung genügt, dass es feststeht und kein Bewegungsziel ist, wobei die Auswahl auf Basis von Daten erster umgebender Objekte, die durch das Radar (5) erfasst werden, wenn ein Fahrer das Fahrzeug (1) verlassen hat, getroffen wird, und des Auswählens und Speicherns einer relativen Position des ersten Bezugsobjekts unter relativen Positionen der ersten umgebenden Objekte, die durch das Radar (5) erfasst werden, wenn der Fahrer das Fahrzeug (1) verlassen hat,
einen zweiten, anschließenden Prozess des Auswählens eines zweiten Bezugsobjekts, das unter zweiten umgebenden Objekten der Bedingung genügt, dass es feststeht und kein Bewegungsziel ist, wobei die Auswahl auf Basis von Daten zweiter umgebender Objekte, die durch das Radar (5) erfasst werden, wenn der Fahrer das Fahrzeug (1) betreten hat, getroffen wird, und des Auswählens einer relativen Position des zweiten Bezugsobjekts unter relativen Positionen der zweiten umgebenden Objekte, die durch das Radar (5) erfasst werden, wenn der Fahrer das Fahrzeug (1) betreten hat, und
einen dritten Prozess des Bestimmens, ob das erste Bezugsobjekt und das zweite Bezugsobjekt dasselbe Ziel sind, und des Vergleichens der relativen Positionen des ersten Bezugsobjekts und des zweiten Bezugsobjekts, von denen bestimmt wird, dass sie dasselbe Ziel sind, um dadurch eine axiale Abweichung des Radars (5) zu detektieren.

2. Vorrichtung zum Detektieren einer axialen Abweichung eines Radars (5) nach Anspruch 1,
wobei die Vorrichtung konfiguriert ist, einen vierten Prozess des Bestimmens, ob die axiale Abweichung des Radars (5) innerhalb eines korrigierbaren Bereichs ist, und einen fünften Prozess des Ausgebens eines Korrekturbefehls einer Bezugsachse des Radars (5), wenn die axiale Abweichung des Radars (5) innerhalb des korrigierbaren Bereichs liegt, auszuführen.

3. Vorrichtung zum Detektieren einer axialen Abweichung eines Radars (5) nach Anspruch 2,
wobei die Vorrichtung konfiguriert ist, einen sechsten Prozess des Ausgebens eines Alarmbefehls, wenn die axiale Abweichung des Radars (5) nicht innerhalb des korrigierbaren Bereichs liegt, auszuführen.

4. An einem Fahrzeug angebrachtes System, das umfasst:
ein Radar (5), das ein umgebendes Objekt (21A, 21B, 22, 23, 24, 25) um ein Fahrzeug (1) detektiert,
eine elektronische Steuereinheit (4), die auf Basis von Daten umgebender Objekte, die durch das Radar (5) erfasst werden, eine Fahrerunterstützung oder autonomes Fahren des Fahrzeugs (1) steuert; und
eine Vorrichtung zum Detektieren einer axialen Abweichung des Radars (5) nach Anspruch 3,
wobei der sechste Prozess ferner umfasst:
Ausgeben von Informationen über die axiale Abweichung des Radars (5) an die elektronische Steuereinheit, wenn die axiale Abweichung des Radars (5) nicht innerhalb des korrigierbaren Bereichs liegt, und wobei
die elektronische Steuereinheit (4) konfiguriert ist, Folgendes auszuführen:
einen siebten Prozess des Bestimmens, ob ein Nichtdetektionsgebiet erzeugt wird, auf Basis der Informationen über die axiale Abweichung des Radars (5),
einen achten Prozess des Bestimmens, ob das Nichtdetektionsgebiet die Steuerung der Fahrunterstützung oder des autonomen Fahrens des Fahrzeugs (1) stört, wenn das Nichtdetektionsgebiet erzeugt wird, und
einen neunten Prozess des Beschränkens der Fahrt des Fahrzeugs (1), wenn das Nichtdetektionsgebiet die Steuerung der Fahrunterstützung oder des autonomen Fahrens des Fahrzeugs (1) stört.

5. Verfahren zum Detektieren der axialen Abweichung eines Radars (5), das an einem Fahrzeug (1) angebracht ist, **dadurch gekennzeichnet, dass** das Verfahren Folgendes umfasst:
einen ersten Prozess, der durch eine Vorrichtung zum Detektieren einer axialen Abweichung ausgeführt wird, des Auswählens eines ersten Bezugsobjekts, das unter ersten umgebenden Objekten der Bedingung genügt, dass es feststeht und kein Bewegungsziel ist, wobei die Auswahl auf Basis von Daten erster umgebender Objekte, die durch das Radar (5) erfasst werden, wenn ein Fahrer das Fahrzeug (1) verlassen hat, getroffen wird, und des Auswählens und Speicherns einer relativen Position des ersten Bezugsobjekts unter relativen Positionen der ersten umgebenden Objekte, die durch das Radar (5) erfasst werden, wenn der Fahrer das Fahrzeug (1) verlassen hat,
einen zweiten Prozess, der durch die Vorrichtung zum Detektieren einer axialen Abweichung danach ausgeführt wird, des Auswählens eines zweiten Bezugsobjekts, das unter zweiten umgebenden Objekten der Bedingung genügt, dass es feststeht und kein Bewegungsziel ist, wobei die Auswahl auf Basis von Daten zweiter umgebender Objekte, die durch das Radar (5) erfasst werden, wenn der Fahrer das Fahrzeug (1) betreten hat, getroffen wird, und des Auswählens einer relativen Position des zweiten Bezugsobjekts unter relativen Positionen der zweiten umgebenden Objekte, die durch das Radar (5) erfasst werden, wenn der Fahrer das Fahrzeug (1) betreten hat, und
einen dritten Prozess, der durch die Vorrichtung zum Detektieren einer axialen Abweichung ausgeführt wird, des Bestimmens, ob das erste Bezugsobjekt und das zweite Bezugsobjekt dasselbe Ziel sind, und des Vergleichens der relativen Positionen des ersten Bezugsobjekts und des zweiten Bezugsobjekts, von denen bestimmt wird, dass sie dasselbe Ziel sind, um dadurch eine axiale Abweichung des Radars (5) zu detektieren.

6. Verfahren zum Detektieren einer axialen Abweichung eines Radars (5) nach Anspruch 5, das ferner umfasst:
einen vierten Prozess, der durch die Vorrichtung zum Detektieren einer axialen Abweichung ausgeführt wird, des Bestimmens, ob die axiale Abweichung des Radars (5) innerhalb eines korrigierbaren Bereichs ist, und
einen fünften Prozess, der durch die Vorrichtung zum Detektieren einer axialen Abweichung ausgeführt wird, des Ausgebens eines Korrekturbefehls einer Bezugsachse des Radars (5), wenn die axiale Abweichung des Radars (5) innerhalb des korrigierbaren Bereichs liegt.

7. Verfahren zum Detektieren einer axialen Abweichung eines Radars (5) nach Anspruch 6, das ferner umfasst:
einen sechsten Prozess, der durch die Vorrichtung zum Detektieren einer axialen Abweichung ausgeführt wird, des Ausgebens eines Alarmbefehls, wenn die axiale Abweichung des Radars (5) nicht innerhalb des korrigierbaren Bereichs liegt.

8. Verfahren zum Detektieren einer axialen Abweichung eines Radars (5) nach Anspruch 7, das ferner umfasst:
einen siebenten Prozess, der durch eine elektronische Steuereinheit ausgeführt wird, des Bestimmens, ob ein Nichtdetektionsgebiet erzeugt wird, auf Basis der Informationen über die axiale Abweichung des Radars (5), wenn die axiale Abweichung des Radars (5) nicht innerhalb des korrigierbaren Bereichs liegt,
einen achten Prozess, der durch die elektronische Steuereinheit ausgeführt wird, des Bestimmens, ob das Nichtdetektionsgebiet die Steuerung der Fahrunterstützung oder des autonomen Fahrens des Fahrzeugs (1) stört, wenn das Nichtdetektionsgebiet erzeugt wird, und
einen neunten Prozess, der durch die elektronische Steuereinheit ausgeführt wird, des Beschränkens der Fahrt des Fahrzeugs (1), wenn das Nichtdetektionsgebiet die Steuerung der Fahrunterstützung oder des autonomen Fahrens des Fahrzeugs (1) stört.

## Revendications

1. Dispositif destiné à détecter une déviation axiale d'un radar (5) monté sur véhicule (1),
**caractérisé en ce que** le dispositif est configuré pour effectuer :
une première opération consistant à sélectionner un premier objet de référence qui satisfait à une condition où il est stationnaire et où il n'est pas une cible en déplacement parmi des premiers objets environnants, la sélection étant faite sur la base de premières données d'objets environnants acquises par le radar (5) quand un conducteur a mis le véhicule (1) en marche, et à sélectionner et stocker une position relative du premier objet de référence parmi des positions relatives des premiers objets environnants, qui sont acquises par le radar (5) quand le conducteur a mis le véhicule (1) en marche,
une deuxième opération consistant, ensuite, à sélectionner un deuxième objet de référence qui satisfait à une condition où il est stationnaire et où il n'est pas une cible en déplacement parmi des deuxièmes objets environnants, la sélection étant faite sur la base de deuxièmes données d'objets environnants acquises par le radar (5) quand le conducteur est monté dans le véhicule (1), et à sélectionner une position relative du deuxième objet de référence parmi les positions relatives des deuxièmes objets de référence, qui sont acquises par le radar (5) quand le conducteur est entré dans le véhicule (1), et
une troisième opération une quatrième opération consistant à déterminer si oui ou non le premier objet de référence et le deuxième objet de référence sont la même cible, et à comparer les positions relatives du premier objet de référence du deuxième objet de référence qui sont déterminées comme étant la même cible, pour ainsi détecter une déviation axiale du radar (5).

2. Dispositif destiné à détecter une déviation axiale d'un radar (5) selon la revendication 1,
dans lequel le dispositif est configuré pour effectuer une quatrième opération consistant à déterminer si oui ou non la déviation axiale du radar (5) est à l'intérieur d'une plage correctible, et une cinquième opération consistant à sortir un ordre de correction d'un axe de référence du radar (5) quand la déviation axiale du radar (5) est à l'intérieur de la plage correctible.

3. Dispositif destiné à détecter une déviation axiale d'un radar (5) selon la revendication 2,
dans lequel le dispositif est configuré pour effectuer une sixième opération consistant à sortir un ordre d'alarme quand la déviation axiale du radar (5) n'est pas à l'intérieur de la plage correctible.

4. Système monté sur véhicule, comprenant :
un radar (5) qui détecte un objet environnant (21A, 21B, 22, 23, 24, 25) autour d'un véhicule (1),
une unité de commande électronique (4) qui commande une aide à la conduite ou une conduite autonome du véhicule (1) sur la base de données d'objets environnants acquises par le radar (5) ; et
un dispositif destiné à détecter une déviation axiale du radar (5) selon la revendication 3,
dans lequel la sixième opération inclut en outre de :
sortir des informations concernant la déviation axiale du radar (5) vers l'unité de commande électronique, quand la déviation axiale du radar (5) n'est pas à l'intérieur de la plage correctible, et dans lequel
l'unité de commande électronique (4) est configurée pour effectuer une septième opération consistant à déterminer si oui ou non une région de non-détection est générée, sur la base des informations concernant la déviation axiale du radar (5),
une huitième opération consistant à déterminer si oui ou non la région de non-détection interfère avec une commande d'aide à la conduite ou de conduite autonome du véhicule (1), quand la région de non-détection est générée, et
une neuvième opération consistant à restreindre une circulation du véhicule (1) quand la région de non-détection interfère avec la commande d'aide à la conduite ou de conduite autonome du véhicule (1).

5. Procédé pour détecter une déviation axiale d'un radar (5) monté sur véhicule (1), **caractérisé en ce que** le procédé comprend :
une première étape, effectuée par un dispositif destiné à détecter une déviation axiale, consistant à sélectionner un premier objet de référence qui satisfait à une condition où il est stationnaire et où il n'est pas une cible en déplacement parmi des premiers objets environnants, la sélection étant faite sur la base de premières données d'objets environnants acquises par le radar (5) quand un conducteur a mis le véhicule (1) en marche, et à sélectionner et stocker une position relative du premier objet de référence parmi des positions relatives des premiers objets environnants, qui sont acquises par le radar (5) quand le conducteur a mis le véhicule (1) en marche ;
une deuxième étape, effectuée par le dispositif destiné à détecter une déviation axiale, consistant, ensuite, à sélectionner un deuxième objet de référence qui satisfait à une condition où il est stationnaire et où il n'est pas une cible en déplacement parmi des deuxièmes objets environnants, la sélection étant faite sur la base de deuxièmes données d'objets environnants acquises par le radar (5) quand le conducteur est entré dans le véhicule (1), et à sélectionner une position relative du deuxième objet de référence parmi les positions relatives des deuxièmes objets de référence, qui sont acquises par le radar (5) quand le conducteur est entré dans le véhicule (1) ; et
une troisième étape, effectuée par le dispositif destiné à détecter une déviation axiale, consistant à déterminer si oui ou non le premier objet de référence et le deuxième objet de référence sont la même cible, et à comparer les positions relatives du premier objet de référence du deuxième objet de référence qui sont déterminées comme étant la même cible, pour ainsi détecter une déviation axiale du radar (5).

6. Procédé pour détecter une déviation axiale d'un radar (5) selon la revendication 5, comprenant en outre :
une quatrième étape, effectuée par le dispositif destiné à détecter une détection axiale, consistant à déterminer si oui ou non la déviation axiale du radar (5) est à l'intérieur d'une plage correctible ; et
une cinquième étape, effectuée par le dispositif destiné à détecter une déviation axiale, consistant à sortir un ordre de correction d'un axe de référence du radar (5) quand la déviation axiale du radar (5) est à l'intérieur de la plage correctible.

7. Procédé pour détecter une déviation axiale d'un radar (5) selon la revendication 6, comprenant en outre
une sixième étape, effectuée par le dispositif destiné à détecter une déviation axiale, consistant à sortir un ordre d'alarme quand la déviation axiale du radar (5) n'est pas à l'intérieur de la plage correctible.

8. Procédé pour détecter une déviation axiale d'un radar (5) selon la revendication 7, comprenant en outre :
une septième étape, effectuée par une unité de commande électronique, consistant à déterminer si oui ou non une région de non-détection est générée, sur la base des informations concernant la déviation axiale du radar (5), quand la déviation axiale du radar (5) n'est pas à l'intérieur de la plage correctible ;
une huitième étape, effectuée par l'unité de commande électronique, consistant à déterminer si oui ou non la région de non-détection interfère avec une commande d'aide à la conduite ou de conduite autonome du véhicule (1), quand la région de non-détection est générée ; et
une neuvième étape, effectuée par l'unité de commande électronique, consistant à restreindre une circulation du véhicule (1) quand la région de non-détection interfère avec la commande d'aide à la conduite ou de conduite autonome du véhicule (1).
